Europäisches Patentamt

(19) European Patent Office

Office européen des brevets

(11) Numéro de publication: **0 034 090**
**B1**

(12) **FASCICULE DE BREVET EUROPEEN**

(45) Date de publication du fascicule du brevet: **31.10.84**

(51) Int. Cl.³: **G 03 B 41/18**

(21) Numéro de dépôt: **81400160.8**

(22) Date de dépôt: **03.02.81**

(54) Machine pour le chargement en plein jour de magasins de films radiographiques.

(30) Priorité: **07.02.80 FR 8002678**

(43) Date de publication de la demande:
**19.08.81 Bulletin 81/33**

(45) Mention de la délivrance du brevet:
**31.10.84 Bulletin 84/44**

(84) Etats contractants désignés:
**DE IT NL**

(56) Documents cités:
**EP-A-0 000 691**
**US-A-3 888 587**
**US-A-3 912 932**
**US-A-4 018 033**

(73) Titulaire: **THOMSON-CGR**
**13, square Max-Hymans**
**F-75015 Paris (FR)**

(72) Inventeur: **Villa, Francesco**
**THOMSON-CSF SCPI 173, bld Haussmann**
**F-75360 Paris Cedex 08 (FR)**

(74) Mandataire: **Boireau, Jacques et al**
**Thomson-CSF SCPI 173, boulevard Haussmann**
**F-75379 Paris Cedex 08 (FR)**

Courier Press, Leamington Spa, England.

## Description

La présente invention concerne une machine permettant d'effectuer, en pleine lumière, le chargement de films vierges empilés dans une pochette standard, dans un magasin équipant un appareil radiographique. Une telle machine permet de charger un nombre prédéterminé de films, ce nombre pouvant être égal ou supérieur à un, soit dans une cassette destinée à être disposée sur un appareil radiographique, soit soit dans un magasin débiteur équipant par exemple, des sélecteurs à cadence rapide. La machine ne peut soit être indépendante de l'appareil radiographique, le magasin ou la cassette à charger lui étant momentanément fixée pendant l'opération de chargement, soit être solidaire de l'appareil radiographique, les films dont elle permet l'extraction alimentant directement l'appareil radiographique. Dans la suite de la description, le terme "magasin" sera utilisé de façon générique pour désigner aussi bien une cassette, qu'un magasin amovible, ou bien encore le magasin fixé sur l'appareil radiographique lui-même.

Différentes techniques de chargement de films en pochettes sont connues à ce jour.

La technique la plus ancienne consistait à charger le magasin débiteur en chambre noire, l'ouverture de la pochette et le chargement étant effectués manuellement.

Des techniques plus récentes ont été mises au point pour réduire les interventions en chambre noire.

Certaines sont semi-automatiques; elles consistent à charger, en chambre noire, un magasin débiteur intermédiaire étanche à la lumière, et à disposer ce magasin chargé dans une machine de chargement automatique sur laquelle on vient fixer le magasin proprement dit qui va équiper l'appareil radiographique, ce magasin étant par exemple une cassette.

D'autres sont complètement ou presque automatiques; c'est-à-dire que la pochette pleine de films et encore fermée est introduite dans une machine de chargement étanche à la lumière, et pouvant donc être dans une salle éclairée, dans laquelle se font les opérations de découpe de la pochette et d'extraction des films vers le magasin à charger.

Une telle machine est décrite dans un brevet US A—3 912 932. Cette machine comporte notamment des moyens supports, dans lesquels est introduite une pochette de films radiographiques vierges; ces moyens supports sont mobiles depuis une première position de chargement de la pochette, jusqu'à une seconde position de découpe de cette pochette, et de transfert des films qu'elle contient. Dans cette seconde position, les films ne sont pas exposés à la lumière, et sont mis à la portée de moyens distributeurs; par ces moyens distributeurs, les fims sont amenés un à jusqu'à une cassette radiographique capable de contenir un ou plusieurs films.

D'autres machines de chargement automatiques connues jusqu'alors présentent l'inconvénient de nécessiter l'utilisation de pochettes spéciales contenant des films eux-mêmes spéciaux, et par exemple des films munis d'enchoches utilisées pour leur extraction.

De plus elles ne permettent généralement pas de charger un nombre n prédéterminé de films avec n>1, dans, un même magasin débiteur, comme cela doit par exemple être le cas pour les magasins débiteurs équipant des sélecteurs à cadence rapide.

L'objet de la présente invention est une machine permettant, à partir de pochettes standard contenant des films eux-mêmes standards, de charger, en pleine lumière, dans un magasin quelconque, un nombre n choisi de films, n pouvant être supérieur à un.

Selon l'invention, une machine pour le chargement en plein jour de magasins de films radiographiques vierges contenus dans une pochette insérée dans des moyens de support et comportant au moins une extrémité aplatie, les films radiographiques étant destinés, lorsque les moyens supports sont dans une position de transfert, à être dégagés de la pochette pour être transportés un par un par des moyens de distribution vers un magasin débiteur, la machine comportant une carrosserie contenant les moyens de support, les moyens de distribution, des moyens de pression agissant sur les moyens de support, des moyens de découpe et des moyens de commande séquentielle de mouvements de tous ces moyens, les moyens de support, contenant la pochette de films, tournant autour d'un axe de rotation depuis une position de chargement de la pochette jusqu'à une position de découpe de l'extrémité aplatie par les moyens de découpe, cette position de découpe étant sensiblement verticale, caractérisée en ce que après la découpe de l'extrémité aplatie, le mouvement des moyens de support autour de l'axe de rotation est poursuivi, sur sensiblement 180°, jusqu'à la position de transfert des films qui tombent seuls sur une plaque.

La présente invention sera mieux comprise à l'aide de la description qui suit, illustrée par les figures annexées qui représent:

— la figure 1, une perspective cavalière d'un appareil fonctionnement selon l'invention;
— les figures 2 (a) et 2 (b), une vue de côté et une vue de dessus représentant les moyens de commande E en partie et les moyens de support A et de pression B;
— la figure 3, une vue en perspective des moyens de découpe C, les moyens de support A arrivant à la position de découpe;
— la figure 4, une vue des moyens de distribution D, la pochette étant installée, dans la position de transfert des films vers le magasin (5).

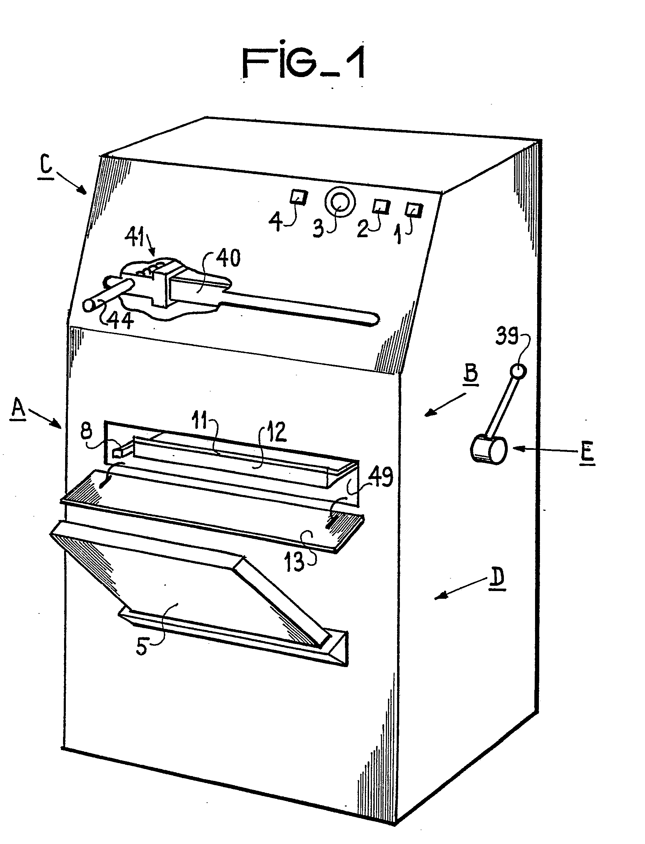

A la figure 1, la répartition des moyens de l'invention est présentée dans un mode particulier de réalisation. La pochette de films est introduite par une fente 49 pratiquée dans la carrosserie étanche de la machine. La carrosserie comporte un volet 13 fermé sur la fente 49 en fonctionnement de la machine et que l'opérateur ouvre pour introduire la pochette de films vierges dans les moyens de support A. Elle comporte aussi une fente de sortie et des moyens de fixation du magasin à charger devant cette fente de sortie, située au niveau des moyens de distribution E des films un par un, dans le bas de la machine. Elle porte aussi un châssis ou structure 21, intérieur, destiné à supporter en particulier les moyens de découpe C dans le haut de la machine.

Ceux-ci sont manoeuvrés par une poignée 44 qui sort de la face avant de la carrosserie par une fente comportant une chicane d'étanchéité à la lumière. Le châssis 21 supporte aussi l'axe 22, axe de rotation des moyens de support A. Une manivelle 39 solidaire d'une came permet le positionnement des films au contact des moyens de distribution quand ceux-ci sont libérés de la pochette. Enfin, dans la partie supérieure, la carrosserie porte un certain nombre de voyants et de commutateurs 1, 2, 3, 4 pour la mise en oeuvre de la machine.

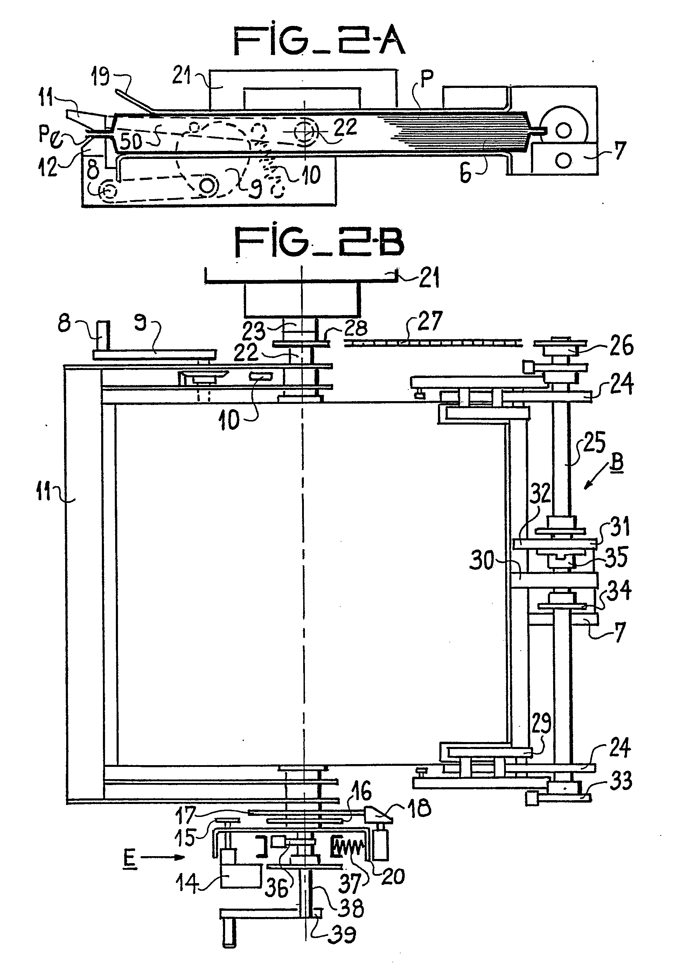

Sur les figures 2a et 2b, la pochette P de films 6 est installée dans le boitier en tôle 19. Elle comporte une extrémité Pe applatie, qu'il faudra découper dans une opération ultérieure, que deux plats 11 et 12 coincent. Le boitier en tôle 19 est monté sur deux pivots 22 qui matérialisent l'axe de rotation 22 et qui sont montés par des supports 23 et 38 sur le châssis 21 de l'appareil. Sur la figure 2a, qui est une coupe transversale de la figure 2b, est représenté le bras 50 de support du plat 11 qui est mobile autour de l'axe 22. Un ressort 10, représenté aussi à la figure 2b, permet de maintenir une pression constante du plat 11 mobile sur le plat 12 articulé lui aussi sur l'axe 22 et maintenu par ressorts au contact du boitier 19. Pour introduire la pochette P dans le boitier 19, on lève le levier 8 qui manoeuvre une came 9 qui tourne sur un axe implanté dans le plat 12 et maintient le plat 11 en position ouverte.

Sur l'arbre 22 sont montés des moyens de commande E qui comportent en particulier un disque 17 cranté à des angles prédéterminés dans lesquels rentre un levier 18, mobile sous l'action d'un électro aimant sur la platine 20. Celle-ci est maintenue en position par la came 36 et le ressort 37.

Sur l'arbre 22, un pignon 28 est relié par une chaîne 27 au pignon 26 fixé sur l'arbre 25, monté sur deux platines 24 fixés sur la boite 19. Les moyens de commande E agissent alors en particulier sur les moyens de pression B par l'intermédiaire de l'arbre 25. Les moyens B assurent les 3 fonctions suivantes:

— le blocage des films pendant la rotation;

— le positionnement de la pochette;
— la retenue de l'emballage de la pochette.

Le blocage du boitier est assuré par les leviers 29 articulés sur les platines 24 et commandés par des cames 33 embrevés sur l'arbre 25. Le positionnement de la pochette P dans le boitier 19 est assuré par les leviers 7 commandés par des cames 35 embrevées sur l'arbre 25.

La pochette P est retenue seule, sur les films 6, par des pointes pénétrant dans l'emballage sans toucher aux films, implantées sur des axes, filetés 32 montés aux extrêmités des leviers 31 commandés par des cames 34 embrevées sur l'arbre 25.

Les moyens de commande E comportant aussi un moteur 14 et une manivelle 39 pour permettre la rotation du boitier 19. Le moteur 14 agit sur l'arbre 22 à l'aide des engreanages 15 et 16. La manivelle 39 est solidaire du pivot 38 qui prolonge l'axe 22.

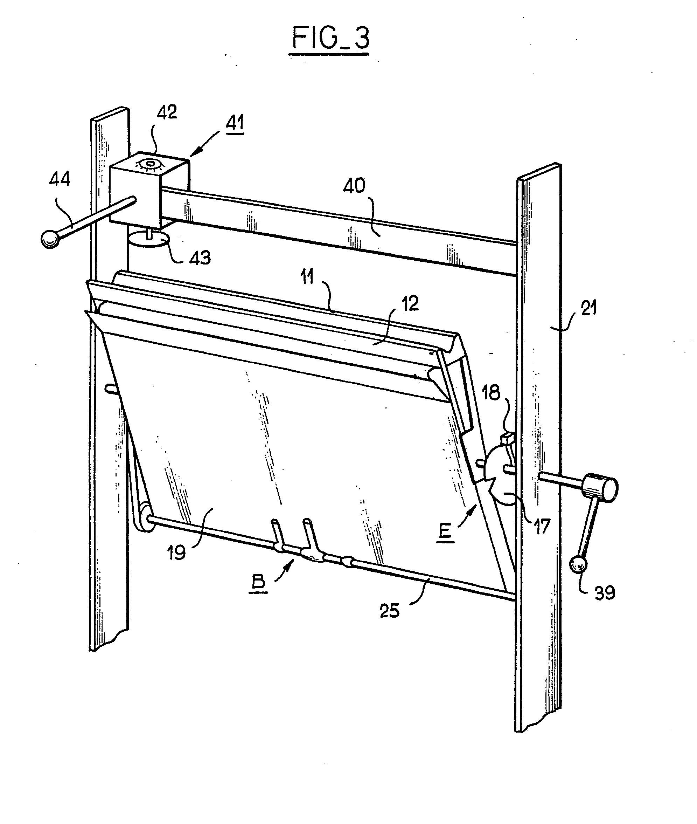

La figure 3 représente les moyens de découpe C. A la figure 1, la position relative de ceux-ci est indiquée. On verra plus loin les raisons de cette disposition. Une structure 21 porte une platine 40 sur laquelle peut glisser un chariot 41 portant un moteur 42 et une poignée 44, une lame circulaire coupante 43 étant solidaire de l'arbre moteur. La poignée 44 passe dans la face avant de l'appareil par une fente longitudinal avec chicane d'étanchéité comme indiqué à la figure 1. Les dimensions des moyens de découpe sont telle que la lame 43 s'engage sous les plats 11 et 12 et vient couper le bord Pe de la pochette P.

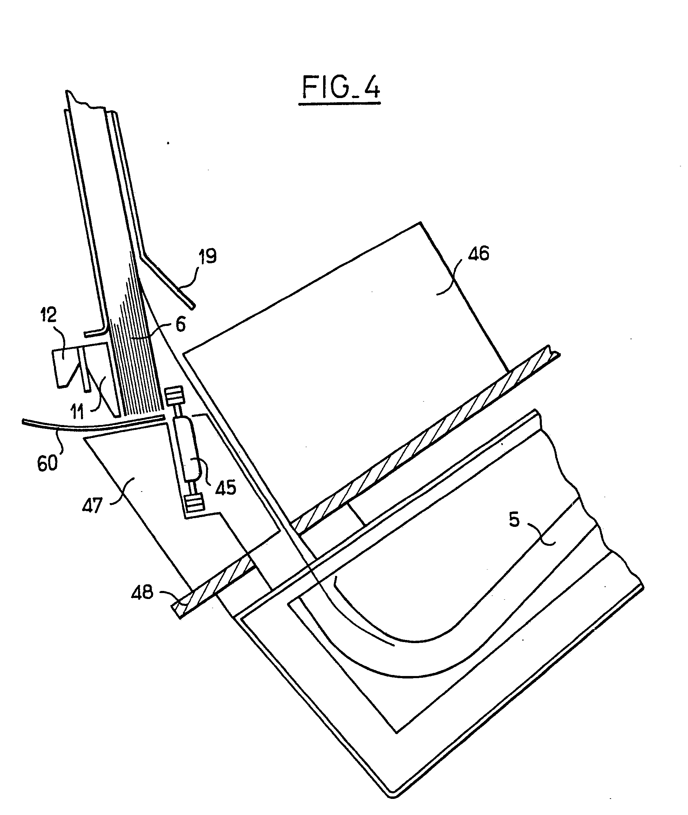

La figure 4 représente le moyens de distribution D dont la position relative est donnée à la figure 1. Les films sont reçus sur une plaque 60 quand ils sont libérés de moyens B et après que se soient effacés les plats 11 et 12 retenus par une butée solidaire de la structure 20.

Les moyens de distribution D sont organisés de la façon suivante:

— un ensemble 46 comportant:
  . des moyens moteurs;
  . des moyens de transfert des films.
— un ensemble 45 de sélection des films un par un;
— un bloc 47 de guidage du film;
— des éléments 48 de liaison étanche et rigide du bâti de la machine avec le magasin à charger 5.

La fente de sortie de la machine à charger et la fente d'entrée du magasin 5 sont en regard. L'ensemble 45 peut être comme celui décrit dans la demande de brevet francaise publiée N° 2313696, déposée le 6 juin 1975 au nom de la Compania Générale di Radiologia sous le titre "Dispositif d'extraction successive de feuilles de films, une par une, d'une pile de films précoupés au même format, notamment pour des appareils changeurs de films radiographiques".

Les moyens moteurs de l'ensemble 46 servent à mouvoir: les moyens de transfert des films comprenant des paliers et des leviers agencés selon des moyens connus par l'homme du métier, l'ensemble de sélection 45 et le bloc 47 de guidage du film.

Le mode de fonctionnement de l'appareil comporte trois étapes:

— préparation de la machine;
— phase de préparation de la pochette;
— phase de distribution des films un par un.

Au cours de la première étape, l'opérateur procède aux manipulations suivantes. Il doit ouvrir le volet 13, abaisser la manivelle 8, introduire la pochette P dans le boîtier 19 en veillant à ce que le bord libre Pe soit appuyé sur le plat fixe 12. Il doit ensuite relever la manivelle 8 ce qui a l'effet de serrer le bord Pe entre les deux plats 11 et 12 fermement maintenus par le ressort 10. Il faut ensuite fixer le magasin 5 devant la fente de sortie de l'appareil et enfin fermer le volet 13 qui sera verrouillé automatiquement en début de rotation du boitier 19.

Un contact déclenché par la fermeture du volet 13 lance alors la séquence de la seconde étape. Le moteur 14 fait tourner à angle droit de boitier 19 de façon à porter le bord Pe en contact avec les moyens de découpe C. Pendant cette rotation, après une rotation de 10°, le levier 7 qui est en contact avec le fond de la pochette P s'abaisse sous l'action de la came 34 de telle sorte que le poids des films mettent en tension le bord supérieur de la pochette.

Après une rotation de 80°, les cames 33 libèrent les leviers 29 lesquels sous l'action de ressorts non représentés bloquent la pochette P. Après une rotation de 90°, le voyant 1 s'allume indiquant à l'opérateur le début de l'opération de découpe. Simultanément le moteur 42 se met en marche. Les éléments 1 et 42 sont déclenchés par le moyen connu du contact de position. L'opérateur déplace alors la poignée 44 et déplace le chariot 41 le long de la platine. La lame 43 tourne à grande vitesse et tranche le bord Pe de la pochette P sans produire de copeaux. Quand le chariot atteint l'autre côté de la pochette, un capteur de position coupe le moteur 42, arrête la lame 43, bloque le chariot 41 et met en route le moteur 14 qui entraîne alors le boitier 19 jusqu'à la position de transfert des films un par un. Les plats 11 et 12 basculent en arrière en pivotant autour d'un axe non représenté, effacés par une butée de la structure 20. Après une rotation de 10°, le levier 31 est actionné par la came 35 et introduit les pointes 32 dans la pochette P contenant les films 6 sans que ceux-ci soient touchés. Après une rotation de 178° de la boite 19, les cames 33 relèvent les leviers 29 ce qui a l'effet de dégager la pochette P et les films 6. Les films tombent alors seuls sur la plaque incurvée 60, la pochette restant accrochée au boîtier 19. Un capteur de position arrête le moteur 14 et allume un voyant lumineux 2. Ce dernier indique à l'operateur qu'il doit abaisser la manivelle 39 pour assurer le contact des films 6 avec l'ensemble de sélection 45.

La troisième phase dite de distribution peut commencer. L'opérateur affiche le nombre de films à extraire de la pochette sur le contacteur 3 et lance les moyens de transfert D. Les ensembles 46 et 47 acheminent alors chaque film dans le magasin 5 qui peut être du type de celui décrit dans la demande de brevet française publiée N° 2464211 déposée le 4 septembre 1979 au nom de la CGR Compania Générale di Radiologia intitulé: "Magasin débiteur de films destiné à équiper un changeur de films radiographiques". A la fin du chargement un voyant 4 est allumé, les moyens moteur inclus dans 46 s'arrêtent et l'opérateur peut alors décrocher le magasin 5 de la machine.

Un compteur totalise le nombre de films 6 disponibles dans la pochette P. On peut réitérer ainsi l'opération jusqu'à épuisement de la pochette.

Pour procéder à un nouveau chargement, l'opérateur doit relever la manivelle 39 qui ramène le boîtier 19 dans la position de chargement, ouvrir le volet 13, abaisser le levier 8, extraire la pochette vide. Il peut alors préparer un nouveau changement.

D'autres variantes selon l'invention permettent d'automatiser encore le fonctionnement et réduisant le nombre des interventions de l'opérateur. En particulier, le déplacement manuel du chariot 41 par l'intermédiaire de la poignée 44 peut être évité et remplacé par un moyen mécanique commandé par les capteurs de position des moyens de découpe C et des moyens de support.

Le manivelle 39 peut être remplacée par un moyen mécanique programmé moteur.

## Revendications

1. Machine pour le chargement en plein jour de magasins de films radiographiques vierges contenus, en paquet, dans une pochette (P) insérée dans des moyens de support (A) et comportant au moins une extrémité aplatie (Pe), les films (6) radiographiques étant destinés, lorsque les moyens de support (A) sont dans une position de transfert, à être dégagés de la pochette (P) pour être transportés un par un par des moyens de distribution (D) vers un magasin débiteur (5), la machine comportant une carrosserie contenant les moyens de support (A), les moyens de distribution (D), des moyens de pression (B) agissant sur les moyens de support (A), des moyens de découpe (C) et des moyens de commande séquentielle (E) de mouvements de tous ces moyens (A, B, C, D), les moyens de support (A) contenant la pochette (P) de films (6), tournant autour d'un axe de rotation (22) depuis une position de chargement de la pochette (P) jusqu'à une position de découpe de l'extrémité aplatie (Pe) par les moyens de découpe (C), cette position de découpe étant sensiblement verticale, caractérisée en ce que après la découpe de l'extrémité aplatie (Pe), le mouvement des moyens de support (A) autour de l'axe de rotation (22) est poursuivi, sur sensiblement 180°, jusqu'à la position de transfert des films (6) qui tombent seuls sur une plaque (60).

2. Machine selon la revendication 1, caractérisée en ce que les moyens de support (A) de la pochette (P) comportent un boitier (19) fixé à l'ace de rotation (22), un plat (12) lié au boitier (19) et un plat mobile (11) tournant autour de l'axe (22) indépendamment de la rotation du boitier (19), les deux plats (11, 12) venant bloquer l'extrémité aplatie (Pe) de cette pochette (P) à partir de la position de chargement.

3. Machine selon la revendication 2, caractérisée en ce que l'extrémité aplatie (Pe) de la pochette est maintenue entre les plats (11, 12) sous l'action d'un ressort (10) fixé d'une part au plat fixe (11) et d'autre part au bras (50) qui soutient le plat mobile (12) dans son mouvement sur l'axe de rotation (22).

4. Machine selon la revendication 3, caractérisée en ce que, les dimensions de plats (11) et (12) et du bras (50) sont prédéterminées pour aménager un espacement entre le haut du paquet de films (6), inclus dans la pochette (P) insérée dans le boitier (19), et les plats (11) et (12).

5. Machine selon la revendication 4, caractérisée en ce que, une lame coupante circulaire (43) tranche l'extrémité aplatie (Pe) de la pochette (P) en tournant dans l'espacement aménagé entre les plats (11, 12) et les films (6).

6. Machine selon la revendication 5, caractérisée en ce que, la lame coupante circulaire (43) est montée sur un arbre tournant, solidaire des mouvements de translation d'un chariot (41) mobile sur un système de guidage longitudinal parallèle à l'extrémité aplatie (Pe) de la pochette (P).

7. Machine selon la revendication 6, caractérisée en ce que, le système de guidage longitudinal du chariot (41) comporte une platine (40) fixée à un châssis (21) à l'intérieur de la carrosserie étanche.

8. Machine selon la revendication 7, caractérisée en ce que le déplacement du chariot sur la platine (40) est effectué grâce à une poignée (44)..

9. Machine selon la revendication 6, caractérisée en ce que le déplacement du chariot (41) sur la platine (40) est réalisé par un moteur (42) solidaire du chariot (41).

10. Machine selon la revendication 8 ou 9, caractérisée en ce que la lame coupante circulaire (43) est entraînée par un moteur (42) solidaire du chariot (41).

11. Machine selon la revendication 7 ou 10, caractérisée en ce que le déplacement longitudinal du chariot (41) sur la platine (40) est réalisé par un moteur.

12. Machine selon la revendication 1, caractérisée en ce que les moyens de pression (B) comportent des cames (33, 35, 34) qui actionnent des leviers (29, 7, 31) qui réalisent respectivement le blocage de la pochette (P) et de son contenu, le positionnement et la retenue de la pochette, les cames étant fixées sur un arbre (25) parallèle à l'axe de rotation (25) et situé sur le fond du boitier (19) de l'autre côté des plats (11, 12).

13. Machine selon la revendication 12, caractérisée en ce que l'arbre (25) des moyens de pression (B) porte un pignon (26) relié par une chaîne (27) à un pignon (28) fixé sur l'axe de rotation (22) afin de rendre mobile en rotation l'arbre (25).

**Patentansprüche**

1. Maschine zur bei vollem Tageslicht erfolgenden Beschickung von Magazinen für unbelichtete radiografische Filme, die paketförmig in einer Tasche (P) enthalten sind, welche in Halterungsmittel (A) eingeschoben ist und wenigstens ein abgeflachtes Ende (Pe) aufweist, wobei die radiografischen Filme (6) dazu bestimmt sind, wenn sich die Halterungsmittel (A) in einer Übergabestellung befinden, aus der Tasche (P) ausgegeben zu werden, um einzeln durch Verteilermittel (D) zu einem Ausgabemagazin (5) befördert zu werden, wobei die Maschine eine Verkleidung aufweist, die Halterungsmittel (A), die Verteilermittel (D), Druckmittel (B), welche auf die Halterungsmittel (A) einwirken, Schneidmittel (C) und Steuermittel (E) zur sequentiellen Steuerung aller dieser Mittel (A, B, C, D) enthält, wobei ferner die Halterungsmittel (A) die Tasche (P) für die Filme (6) enthalten, welche um eine Drehachse (22) aus einer Ladestellung der Tasche (P) bis in eine Schneidstellung zum Abtrennen des abgeflachten Endes (Pe) durch die Schneidmittel (C) verdrehbar ist, und wobei diese Schneidstellung im wesentlichen vertikal ist, dadurch gekennzeichnet, daß nach dem Abschneiden des abgeflachten Endes (Pe) die Bewegung der Halterungsmittel (A) um die Drehachse (22) über etwa 180° bis zur Übergabestellung der Filme (6) fortgesetzt wird, die allein auf eine Platte (60) fallen.

2. Maschine nach Anspruch 1, dadurch gekennzeichnet, daß die Halterungsmittel (A) der Tachse (P) ein an der Drehachse (22) befestigtes Gehäuse (19), eine mit dem Gehäuse (19) verbundene Flachseite (12) und ein bewegliches Flachteil (11) umfassen, welches um die Drehachse (22) unabhängig von der Drehung des Gehäuses (19) drehbar ist, wobei die Flachseite und das Flachteil (11, 12) das abgeflachte Ende (Pe) dieser Tasche (P) ausgehend von der Ladestellung blockieren.

3. Maschine nach Anspruch 2, dadurch gekennzeichnet, daß das abgeflachte Ende (Pe) der Tasche zwischen den Flachteilen (11, 12) unter der Wirkung einer Feder (10) festgehalten wird, die einerseits an dem feststehenden Flachteil (11) und andrerseits an dem Arm (50) befestigt ist, welcher das bewegliche Flachteil (12) bei seiner Bewegung auf seiner Drehachse (22) unterstützt.

4. Maschine nach Anspruch 3, dadurch gekennzeichnet, daß die Abmessungen der Flachteil (11) und (12) und des Armes (50) derart vorbestimmt sind, daß ein Raum zwischen der Oberseite des Filmpaketes (6), das in der in das Gehäuse (19) eingeschobenen Tasche (P) enthalten ist, und den Flachteilen (11) und (12) verbleibt.

5. Maschine nach Anspruch 4, dadurch gekennzeichnet, daß eine kreisrunde Schnedklinge (43) das abgeflachte Ende (Pe) der Tasche (P) abtrennt, indem sie in dem zwischen den Flachteilen (11, 12) und den Filmen (6) verbleibenden Raum rotiert.

6. Maschine nach Anspruch 5, dadurch gekennzeichnet, daß die kreisrunde Schneidklinge (43) auf einer rotierenden Welle montiert ist, die translationsbewegungsschlüssig mit einem Wagen (41) verbunden ist, welcher auf einem Längsführungssystem beweglich ist, das parallel zu dem abgeflachten Ende (Pe) der Tasche (P) verläuft.

7. Maschine nach Anspruch 6, dadurch gekennzeichnet, daß das Längsführungssystem des Wagens (41) eine Tragplatte (40) umfaßt, die an einem Chassis (21) im Inneren der dichten Verkleidung befestigt ist.

8. Maschine nach Anspruch 7, dadurch gekennzeichnet, daß die Bewegung des Wagens auf der Tragplatte (40) durch einen Handgriff (44) bewirkt wird.

9. Maschine nach Anspruch 6, dadurch gekennzeichnet, daß die Bewegung des Wagens (41) auf der Tragplatte (40) mittels eines Motors (42) verwirklicht wird, der fest mit dem Wagen (41) verbunden ist.

10. Maschine nach Anspruch 8 oder 9, dadurch gekennzeichnet, daß die kreisrunde Schneidklinge (43) durch einen mit dem Wagen (41) fest verbundenen Motor (42) angetrieben wird.

11. Maschine nach Anspruch 7 oder 10, dadurch gekennzeichnet, daß die Längsbewegung des Wagens (41) auf der Tragplatte (40) durch einen Motor verwirklicht wird.

12. Maschine nach Anspruch 1, dadurch gekennzeichnet, daß die Druckmittel (B) Nocken (33, 35, 34) umfassen, welche Hebel (29, 7, 31) betätigen, welche die Blockierung der Tasche (P) und ihres Inhalts bzw. die Positionierung und den Rückhalt der Tasche verwirklichen, wobei die Nocken auf einer Welle (25) befestigt sind, die parallel zur Drehachse (25) ist und am Boden des Gehäuses (19) auf der anderen Seite der Flachteile (11, 12) angeordnet ist.

13. Maschine nach Anspruch 12, dadurch gekennzeichnet, daß die Welle (25) der Druckmittel (B) ein Ritzel (26) trägt, das über eine Kette (27) an ein Ritzel (28) angeschlossen ist, das auf der Drehachse (22) befestigt ist, um die Welle (25) drehbeweglich zu machen.

**Claims**

1. Machine for loading, at full daylight, magazines of radiographic unexposed films contained in packet shape within a pocket (P) inserted into carrier means (A) and comprising at least one flattened end (Pe), the radiographic films (6) being susceptible when the carrier means (A) are in a transfer position to be delivered from the pocket (P) and to be transported one by one by distribution means (D) towards a supply magazine (5), the machine comprising a body containing the carrier means (A), the distribution means (D), pressure means (B) acting on the carrier means (A), cutting means (C) and sequential control means (E) for controlling the movements of all of these means (A, B, C, D), the carrier means (A) containing the pocket (P) of films (6) rotating about a rotational axis (22) from a loading position of the pocket (P) to a cutting position for cutting the flattened end (Pe) by the cutting means (C), this cutting position being substantially vertical, characterized in that, after cutting the flattened end (Pe) the movement of the carrier means (A) about the rotational axis (22) is continued across substantially 180° until the transfer position of the films (6) is reached, the latter falling alone onto a plate (60).

2. Machine according to claim 1, characterized in that the carrier means (A) of the pocket (P) comprises a housing (19) secured to the rotational axis (22), a flat (12) connected to the housing (19) and a movable flat (11) rotating about the axis (22) independent of the rotation of the housing (19), the two flats (11, 12) coming to block the flattened end (Pe) of this pocket (P) from the loading position.

3. Machine according to claim 2, characterized in that the flattened end (Pe) of the pocket is maintained between the flats (11, 12) under the action of a spring (10) secured to the fixed flat (11) on the one hand and to the arm (50) on the other hand which sustains the movable flat (12) in its movement about the rotational axis (22).

4. Machine according to claim 3, characterized in that the dimensions of the flats (11) and (12) and of the arm (50) are predetermined in a manner to provide a space between the upper side of the packet of films (6) contained within the pocket (P) inserted into the housing (19) and the flats (11) and (12).

5. Machine according to claim 4, characterized in that a circular cutter plate (43) cuts the flattened end (Pe) of the pocket (P) by rotating within the space provided between the flats (11, 12) and the films (6).

6. Machine according to claim 5, characterized in that the circular cutter plate (43) is mounted on a rotating shaft fixed in translational movement with a carriage (41) which is movable on a longitudinal guiding system extending in parallel to the flattened end (P) of the pocket (P).

7. Machine according to claim 6, characterized in that the longitudinal guiding system of the carriage (41) comprises a carrier plate (40) secured to a chassis (21) inside of the tight body.

8. Machine according to claim 7, characterized in that the movement of the carriage on the carrier plate (40) is obtained through a handle (44).

9. Machine according to claim 6, characterized in that the movement of the carriage (41) on the carrier plate (40) is obtained through a motor (42) mounted on the carriage (41).

10. Machine according to claim 8 or 9, characterized in that the circular cutter plate (43) is driven by a motor (42) mounted on the carriage (41).

11. Machine according to claim 7 or 10, characterized in that the longitudinal movement of the carriage (41) on the carrier plate (40) is obtained by a motor.

12. Machine according to claim 1, characterized in that the pressure means (B) comprise cams (33, 35, 34) operating levers (29, 7, 31) performing respectively the blocking of the pocket (P) and its content, the positioning and the maintenance of the pocket, the cams being secured on a shaft (25) which is parallel to the axis of rotation (25) and located at the bottom of the housing (19) on the other side of the flats (11, 12).

13. Machine according to claim 12, characterized in that the shaft (25) of the pressure means (B) carries a pinion (26) connected through a chain (27) to a pinion (28) mounted on the rotational axis (22) in order to make the shaft (25) rotationally movable.

# FIG_1

# FIG_2-A

# FIG_2-B

## FIG_3

# FIG. 4